# EUROPÄISCHE PATENTSCHRIFT

(11) **EP 1 177 247 B1**
(45) Veröffentlichungstag und Bekanntmachung des Hinweises auf die Patenterteilung: **01.08.2007**
(21) Anmeldenummer: 00934975.4
(22) Anmeldetag: 02.05.2000
(51) Int. Cl.: C08J 5/22, B01D 69/12

(54) **KOMPOSITE UND KOMPOSITMEMBRANEN**
COMPOSITES AND COMPOSITE MEMBRANES
COMPOSITES ET MEMBRANES COMPOSITES

(30) Priorität: 30.04.1999 DE 19919881
(43) Veröffentlichungstag der Anmeldung: 06.02.2002
(73) Patentinhaber: Häring, Thomas, 70619 Stuttgart (DE); Häring, Rima, 70619 Stuttgart (DE)
(72) Erfinder: KERRES, Jochen, D-73760 Ostfildern (DE); HÄRING, Thomas, D-70619 Stuttgart (DE); HÄRING, Rima, D-70619 Stuttgart (DE)
(86) Internationale Anmeldenummer: PCT/EP2000/003910
(87) Internationale Veröffentlichungsnummer: WO 2000/074827

(56) Entgegenhaltungen:
- EP-A- 0 302 494
- EP-A- 0 574 791
- US-A- 5 658 460
- POLTARZEWSKI Z ET AL: "Novel proton conducting composite electrolytes for application in methanol fuel cells" SOLID STATE IONICS,NL,NORTH HOLLAND PUB. COMPANY. AMSTERDAM, Bd. 119, Nr. 1-4, 1. April 1999 (1999-04-01), Seiten 301-304, XP004164408 ISSN: 0167-2738

## Beschreibung

### Stand der Technik

Ionomermembranen finden Verwendung in vielen Prozessen, so zum Beispiel in Membranbrennstoffzellen, in der Elektrodialyse, in der Diffusionsdialyse, in der Elektrolyse (PEM-Elektrolyse, Chlor-Alkali-Elektrolyse) oder bei elektrochemischen Prozessen.

Nachteil der verfügbaren Membranen ist jedoch, daß ihre Protonenleitfähigkeit im Temperaturbereich über 100°C in den meisten Fällen aufgrund Membranaustrocknung stark abnimmt. Der Temperaturbereich über 100°C ist jedoch für die Brennstoffzellenanwendung von Ionomermembranen sehr interessant, da über 100°C die Temperatursteuerung der Brennstoffzelle stark vereinfacht ist und die Katalyse der Brennstoffzellenreaktion wesentlich verbessert ist (Überspannungen verringert, keine CO-Beladung mehr, die den Katalysator vergiften könnte).

Nur wenige Beispiele für Membranen, die auch über 100°C noch eine gute Protonenleitfähigkeit aufweisen, sind aus der Literatur bekannt, so zum Beispiel Poly(phenylen)e mit Carbonyl-1,4-phenylen-oxyphenyl-4-Sulfonäure-Seitengruppen. Die Protonenleitfähigkeit dieser Membranen nimmt jedoch oberhalb 130°C auch stark ab, und der Grund für die gute Protonenleitfähigkeit zwischen 100°C und 130°C ist auch nicht klar.

Die Leitung der Protonen basiert auf dem Grotthus-Mechanismus, nach dem in sauren Medien Protonen, in alkalischen Lösungen Hydroxylionen als Ladungsträger auftreten. Es besteht eine über Wasserstoffbrückenbindungen vernetzte Struktur, die den eigentlichen Ladungstransport ermöglicht. Das bedeutet, daß das in der Membran vorhandene Wasser eine tragende Rolle beim Ladungstransport spielt: Ohne dieses zusätzliche Wasser findet in diesen kommerziell erhältlichen Membranen kein nennenswerter Ladungstransport durch die Membran mehr statt, sie verliert ihre Funktion. Andere, neuere Entwicklungen, die anstelle des Fluorkohlenwasserstoffgerüsts mit Phosphatgerüsten arbeiten, benötigen ebenfalls Wasser als zusätzlichen Netzwerkbildner ***(***Alberti et. al., SSPC9, Bled, Slowenien, 17.-21.8.1998, Extended Abstracts, S. 235 ***)*.** Die Zugabe kleinster SiO₂-Partikel zu o.g. Membranen ***(***Antonucci et. al., SSPC9, Bled, Slowenien, 17.-21.8.1998, Extended Abstracts, S. 187***)*** führt zwar zu einer Stabilisierung der Protonenleitung bis 140 °C, allerdings nur unter 4,5 bar Druck Betriebsbedingungen. Ohne erhöhten Arbeitsdruck verlieren auch diese Membranen oberhalb 100 °C ihr Wassernetzwerk und trocknen aus.

Z. Poltarzewski et al. (Solid State lonics 119, 301-304 (1999) beschreiben KompositMembranen enthaltend Zeolite und PTFE, die aus wässerig-alkoholischen Dispersionen durch Koagulation erhalten werden.

Ein wesentlicher Nachteil aller o. g. Membrantypen ist daher, daß sie selbst unter optimalen Betriebsbedingungen nur für Anwendungstemperaturen bis max. 100 °C geeignet sind.

In gleicher Weise wie oben genannt haben Denton et al. (US 6,042,958) Komposite aus ionenleitenden Polymeren und porösen Substraten hergestellt. Als silikatische Komponenten wurden hier Glas, Keramik oder Silica verwendet. In den angeführten Beispielen wurde auch hier nicht über die Betriebstemperatur von 80°C hinausgegangen.

In der Direkt-Methanol-Brennstoffzelle (DMFC) ist zwar ausreichend Wasser vorhanden, jedoch führt der Durchtritt von Methanol durch die Membran zu einem erheblichen Leistungsabfall.

Stellt man nun Komposite aus sulfonierten Polyaryletherertherketonmembranen (EP 0574791 B1) oder sulfoniertem Polyethersulfon und Silica her, so quillt die Membran bei einer Kationenaustauserkapazität von 1,5 [meq/gr] so stark auf das sie letztendlich zerstört wird.

Der Vorteil der erfindungsgemäßen Komposite und der daraus hergestellten Membranen ist die Einlagerung der einer organischen Komponente, insbesondere von protonierten Stickstoffbasen in die Kavitäten der Schichtsilikate, was eine Vernetzungskomponente darstellt, wenn die Base an einem Polymerbackbone sich befindet.. Desweiteren ermöglicht die gezielte Einlagerung von Kationen oder Metallhydroxiden mit nachfolgender Umsetzung zu den entsprechenden Metalloxiden die lewissauren Eigenschaften und Größe der Kavitäten der Membranen in einem weiten Bereich zu variieren. Die Schichtsilikate lassen sich darüber hinaus funktionalisieren, so daß sie mit Ionomeren in die sie eingebettet sind entweder wechselwirken oder das sie umgebende Medium gemäß ihrer funktionelle Gruppe beeinflussen.

Schichtsilicate (Tonmineralien) haben einige interessante Eigenschaften:
- sie sind in der Lage, Hydratwasser bis 250°C zu halten.
- in diese Stoffe können zusätzlich Metallkationen und Metalloxide eingelagert werden, wodurch eine intrinische Protonenleitfähigkeit induziert wird nach dem allgemeinem Schema: . Mⁿ⁺(H₂O) -> (M-OH)⁽ⁿ⁻¹⁾⁺+ H⁺ [Zeolite, clay and heteropoly acid in organic reactions, Y.Izumi, K.Urabe, M.Onaka; 1992; Weinheim, VCH-Verlag, S.26].
- die Schichtsilicate, die lewissaure Kavitäten aufweisen, können durch Säure-Base-Wechselwirkung mit den basischen Gruppen von basischen Polymeren interkalieren [Kunststoffnanokomposite, Symposium: Von der Invention zur Innovation, Publikation zum Symposium des Fonds der Chemischen Industrie am 6.Mai 1998 in Köln].

Aufgrund dieser Eigenschaft wurden bereits einige Typen von Schichtsilicat/Polymer-Komposites synthetisiert. So haben Mühlhaupt et al. Komposites aus Montmorillonit und Polypropylen, Montmorillonit und Polyamid, und Montmorillonit und Plexiglas hergestellt. Bei diesen Komposites wird z.B. das Plexiglas durch die Mischung mit Montmorillonit schwerentflammbar, da die eingemischten Schichtsilicate Barrieren für die bei der

Verbrennung entstehenden Pyrolysegase darstellen.

### 4.Aufgabe der vorliegenden Erfindung:

Ausgehend von diesem Stand der Technik war es die Aufgabe der vorliegenden Erfindung Komposite bereitzustellen, die eine hohe Ionenleitfähigkeit (insbesondere Protonenleitfähigkeit), bei gleichzeitig begrenzter Quellung besitzen und eine Betriebstemperatur in Elektrochemischen Zellen von mehr als 100°C ermöglichen.

Gegenstand der vorliegenden Erfindung ist somit ein ionenleitender Komposit, enthaltend eine Säure und/ oder eine organische Base und ein Schichtsilikat, dadurch gekennzeichnet,daß die Zusammensetzung des Säure-Base Anteils zu 1 bis 99 Gew.% und das Schichtsilikat zu 99 bis 1 Gew.% enthalten ist.

### Erfindungsbeschreibung (Produktbeschreibung)

**(a) Die Säure kann sein**
   ein Kationenaustauscherpolymer (mit den Kationenaustauschergruppen -SO₃H, -COOH,-PO₃H₂, wobei das Polymer nur mit einer der beschriebenen Kationenaustauschergruppen oder mit einer Mischung der beschriebenen Kationenaustauschergruppen modifiziert sein kann); das Polymer kann dabei unvernetzt oder kovalent vernetzt sein. Im allgemeinen liegt die Ionenaustauscherkapazität zwischen 0,1 und 12 Milliäquvalent pro Gramm. Im Besonderen zwischen 0,3 und 8 Milliäquvalent pro Gramm. Speziell zwischen 0,5 und 2 Milliäquivalent pro Gramm. Besonders bevorzugt als Backbone sind dabei Thermoplasten.
**(b)** Die Säure kann auch eine organische oder anorganische niedermolekulare Säure sein. Für den anorganischen Fall ist besonders bevorzugt die Schwefelsäure und die Phosphorsäure. Für den organischen Fall kommen alle niedermolekularen Säuren in Betracht die Sulfonsäuren oder Carbonsäuren sind. Speziell alle Aminosulfonsäuren und als ihre Vorläufer die Aminosulfochloride.
**(c) Die Base kann sein**
   ein Anionenaustauscherpolymer (mit den Anionenaustauschergruppen -NR₃⁺ (R=H, Alkyl, Aryl), Pyridinium PyrR⁺, Imidazolium ImR⁺, Pyrazolium PyrazR⁺, Triazolium TriR⁺ und andere organische basische aromatische und/oder nichtaromatische Gruppierungen (R=H, Alkyl, Aryl), wobei das Polymer nur mit einer der beschriebenen Anionenaustauschergruppen oder mit einer Mischung der beschriebenen Anionenaustauschergruppen modifiziert sein kann); das Polymer kann dabei unvernetzt oder kovalent vernetzt sein. Die Anionenaustauscherkapazität liegt dabei im allgemeinen zwischen 1 und 15 Milliäquivalent pro Gramm. Im Besonderen zwischen 3 und 12 Milliäquivalent je Gramm und im Besonderen zwischen 6 und 10 Milliäquvalent pro Gramm. Als Backbone werden wieder alle Thermoplasten bevorzugt besonders Polysulfon, Polyetheretherketon, Polybenzimidazole und Polyvinylpyridin.
**(d)** Die Base kann eine organische oder anorganische niedermolekulare Base sein. Als organische niedermolekulare Base sind alle Guanidinderivate besonders bevorzugt.
**(e)** Die funktionelle Gruppe der Säure und der Base können sich im selben Molkül befinden. Dieses Molekül kann niedermolekular oder hochmolekular sein. Ist es ein Polymer, dann befinden sich auf der Polymerkette sowohl Anionenaustauschergruppen aus (c) als auch Kationenaustauschergruppen aus (a).
**(f)** Die genannten Säuren und Basen von (a) bis (e) können im Komposit gemischt sein. Jedes Mischungsverhältnis kann dabei angenommen werden. Der Blend kann dabei zusätzlich zur ionischen Vernetzung noch kovalent vernetzt sein.
**(g)** Ist sowohl die Säure als auch die Base niedermolekular so ist zusätzlich noch ein unmodifiziertes Polymer im Komposit enthalten.
**(h)** Der anorganische aktive Füllstoff ist ein Schichtsilikat auf der Basis von Montmorillonit, Smectit, Illit, Sepiolit, Palygorskit, Muscovit, Allevardit, Amesit, Hectorit, Talkum, Fluorhectorit, Saponit, Beidelit, Nontronit, Stevensit, Bentonit, Glimmer, Vermiculit, Fluorvermiculit, Halloysit, Fluor enthaltende synthetische Talkumtypen oder Mischungen aus zwei oder mehr der genannten Schichtsilikate. Das Schichtsilikat kann delaminiert oder pillartiert sein. Besonders bevorzugt wird Montmorillonit.

Der Gewichtsanteil des Schichtsilikates kann allgemein von 1 bis 80 Prozent betragen, besonders von 2 bis 30 Gew.% und speziell von 5 bis 20% Gew..

### Beschreibung des funktionalisierten Schichtsilikates:

Unter einem Schichtsilikat versteht man im allgemeinen Silikate, in welchen die SiO₄-Tetraeder in zweidimensionalen unendlichen Netzwerken verbunden sind. (Die empirische Formel für das Anion lautet (Si₂O₅²⁻)ₙ). Die einzelnen Schichten sind durch die zwischen ihnen liegenden Kationen miteinander verbunden, wobei meistens als Kationen Na, K, Mg, Al oder/und Ca in den natürlich vorkommenden Schichtsilikaten vorliegen.

Unter einem delaminierten funktionalisiertem Schichtsilikat sollen Schichtsilikate verstanden werden, bei welchen durch Umsetzung mit sogenannten Funktionalisierungsmitteln die Schichtabstände zunächst vergrößert werden. Die Schichtdicken derartiger Silikate vor der Delaminierung betragen üblicherweise von 5 bis 100 Angström, vorzugsweise 5 bis 50 und insbesondere 8 bis 20 Angström. Zur Vergrößerung der Schichtabstände (Hydrophobierung) werden die Schichtsilikate (vor der Herstellung der erfindungsgemäßen Komposite) mit sogenannten funktionalisierenden Hydrophobierungsmitteln umgesetzt, welche oft auch als Oniumionen oder Oniumsalze bezeichnet werden.

Die Kationen der Schichtsilikate werden durch organische funktionalisierende Hydrophobierungsmittel ersetzt, wobei durch die Art des organischen Restes die gewünschten Schichtabstände eingestellt werden können, die sich nach der Art des jeweiligen funktionalisierenden Moleküls oder Polymeren, in welches das Schichtsilikat eingebaut werden soll, richten.

Der Austausch der Metallionen kann vollständig oder teilweise erfolgen. Bevorzugt ist ein vollständiger Austausch der Metallionen. Die Menge der austauschbaren Metallionen wird üblicherweise in Milliäquivalent (meq) pro 1 g Schichtsilikat angegeben und als Ionenaustauscherkapazität bezeichnet.

Bevorzugt sind Schichtsilikate mit einer Kationenaustauscherkapazität von mindestens 0,5 , vorzugsweise 0,8 bis 1,3 meq/g.

Geeignete organische funktionalisierende Hydrophobierungsmittel leiten sich von Oxonium-, Ammonium-, Phosphonium- und Sulfoniumionen ab, welche einen oder mehrere organische Reste tragen können.

Als geeignete funktionalisierende Hydrophobierungsmittel seien solche der allgemeinen Formel I und/oder II genannt:

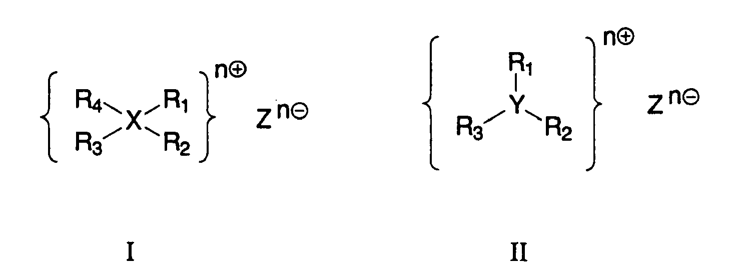

Wobei die Substituenten folgende Bedeutung haben:
R1, R2, R3, R4 unabhängig voneinander Wasserstoff, einen geradkettigen verzweigten, gesättigten oder ungesättigten Kohlenwasserstoffrest mit 1 bis 40, vorzugsweise 1 bis 20 C-Atomen, welcher gegebenenfalls mindestens eine funktionelle Gruppe trägt oder 2 der Reste miteinander verbunden sind, insbesondere zu einem heterocyclischen Rest mit 5 bis 10 C-Atomen besonders bevorzugt mit einem und mehr N-Atomen.
X für Phosphor oder Stickstoff,
Y für Sauerstoff oder Schwefel,
n für eine ganze Zahl von 1 bis 5, vorzugsweise 1 bis 3 und
Z für eine Anion steht.

Geeignete funktionelle Gruppen sind Hydroxyl-, Nitro- oder Sulfogruppen, wobei Carboxyl- und Sulfonsäuregruppen besonders bevorzugt sind. Ebenso sind besonders bevorzugt Sulfochlorid- und Carbonsäurechloride.

Geeignete Anionen Z leiten sich von Protonen liefernden Säuren, insbesondere Mineralsäuren ab, wobei Halogene wie Chlor, Brom, Flour, Iod, Sulfat, Sulfonat, Phosphat, Phosphonat, Phosphit und Carboxylat, insbesondere Acetat bevorzugt sind.

Die als Ausgangsstoffe verwendeten Schichtsilikate werden in der Regel in Form einer Suspension umgesetzt. Das bevorzugte Suspendierungsmittel ist Wasser, gegebenenfalls in Mischung mit Alkoholen, insbesondere niederen Alkoholen mit 1 bis 3 Kohlenstoffatomen. Ist das funktionalisierende Hydrophobierungsmittel nicht wasserlöslich, so wird das Lösungmittel bevorzugt indem es sich löst. Besonders ist dies dann ein aprotisches Lösungsmittel. Weitere Beispiele für Suspendiermittel sind Ketone und Kohlenwasserstoffe. Gewöhnlich wird ein mit Wasser mischbares Suspendierungsmittel bevorzugt. Bei der Zugabe des Hydrophobierungsmittel zum Schichtsilikat tritt ein Ionenaustausch ein, wodurch das Schichtsilikat überlicherweise aus der Lösung ausfällt. Das als Nebenprodukt des Ionenaustausch entstehende Metallsalz ist vorzugsweise wasserlöslich, so daß das hydrophobierte Schichtsilikat als kristalliner Feststoff durch z.B. Abfiltrieren abgetrennt werden kann.

Der Ionenaustausch ist von der Reaktionstemperatur weitgehend unabhängig. Die Temperatur liegt vorzugsweise über dem Kristallisationspunkt des Mediums und unter seinem Siedepunkt. Bei wäßrigen Systemen liegt die Temperatur zwischen 0 und 100°C, vorzugsweise zwischen 40 und 80°C.

Für Kationen- und Anionenaustauscherpolymer sind Alkylammoniumionen bevorzugt, besonders dann wenn als funktionelle Gruppe zusätzlich noch ein Carbonsäurechlorid oder Sulfonsäurechlorid an demselben Molekül vorhanden ist. Die Alkylammoniumionen sind über übliche Methylierungsreagenzien, wie Methyljodid erhältlich. Geeignete Ammoniumionen sind omega-Aminocarbonsäuren, besonders bevorzugt sind omega-Aminosulfonsäuren und die omega-Alkylaminosulfonsäuren.

Die omega-Aminosulfonsäuren und die omega-Alkylaminosulfonsäuren sind erhältlich mit üblichen Mineralsäuren, beispielsweise Salzsäure, Schwefelsäure oder Phosphorsäure oder aus Methylierungsreagenzien wie Methyljodid.

Weitere bevorzugte Ammoniumionen sind Pyridin- und Laurylammoniumionen.

Nach der Hydrophobierung weisen die Schichtsilikate im allgemeinen einen Schichtabstand von 10 bis 50 Angström, vorzugsweise von 13 bis 40 Angström auf.

Das hydrophobierte und funktionalisierte Schichtsilikat wird von Wasser durch Trocknen befreit. Im allgemeinen enthält das so behandelte Schichtsilikat noch einen Restwassergehalt von 0-5 Gew. % Wasser. Anschließend kann das hydrophobierte Schichtsilikat als Suspension in einem möglichst wasserfreien Suspendiermittel mit den erwähnten Polymeren gemischt werden und zu weiterverarbeitet werden.

Erfindungsgemäß werden die Polymere, besonders bevorzugt die thermoplastischen funktionalisierten Polymere (Ionomere) zu der Suspension der hydrophobierten Schichtsilikate gegeben. Dies kann in bereits gelöster Form erfolgen oder die Polymere werden in der Suspension selbst in Lösung gebracht. Allgemein ist der Anteil der Schichtsilikate zwischen 1 und 70 Gew.%. Besonders zischen 2 und 40 Gew. % und speziell zwischen 5 und 15 Gew. %.

### Verfahren zur Herstellung der Komposite

Die vorliegende Erfindung betrifft desweiteren ein Verfahren zur Herstellung der Kompositmembranen.

Im Folgenden werden Verfahrenbeispiele zur Herstellung von protonenleitenden Kompositen mit hoher Protonenleitfähig beschrieben.
1) Ein Aminoarylsulfochlorid wird in Tetrahydrofuran gelöst. Danach wird eine entsprechende Menge Montmorillonit K10 hinzugegeben. Der Montmorillonit ist protonenausgetauscht und getrocknet. Danach wird mehrere Stunden gerührt. Die Rührzeit ist abhängig von der Molekülgröße des Aminoarylsulfochlorides und dem Verhältnis der Aminogruppe zur Kationenaustauscherkapazität des Montmorillonites. Während des Rührvorganges interkaliert die Aminogruppe in die Kavitäten des Montmorillonites. Zu der Suspension gibt man nun in Tetrahydrofuran gelöstes sulfochloriertes Polysulfon. Der Sulfochloridgehalt des Thermoplasten beträgt ca. 0,5 Gruppen je Wiederholungseinheit. Die Suspension wird gerührt, vorsichtig entgast und zu einem Film auf einer Glasplatte ausgerackelt. Bei Raumtemperatur läßt man das Tetrahydrofuran (THF) abdampfen. Der Gehalt an Montmorillonit wird so gewählt, daß er zwischen 5 und 10 Gew.% des hinzugegeben sulfochloriertem Polysulfon liegt. Ist der Film vollständig getrocknet wird er in demineralisiertem Wasser abgelöst und danach in 10% Salzsäure bei 90°C nachbehandelt.
   Hierbei werden die Sulfochloridgruppen hydrolisiert und zu Sulfonsäuregruppen umgesetzt. Die erhaltene Membran wird noch in 80-90°C heißem Wasser nachbehandelt, bis keine Salzsäure mehr nachweisbar ist.
   Sulfochloriertes Polysulfon mit 0,5 Gruppen SO₂Cl je Wiederholungseinheit entspricht nach der Hydrolyse einer Kationenaustauscherkapazität von 1,0 Milliäquivalent je Gramm. Durch die zusätzlichen Sulfonsäuregruppen aus dem Aminoarylsulfochlorid steigt die Kationenaustauscherkapazität entsprechend ihrer Menge erheblich an und ist nicht wasserlöslich. Bei gleicher Kationenaustauscherkapazität ist ausschließlich sulfoniertes Polysulfon wasserlöslich.
2) Sulfoniertes Polyetheretherketon mit einer Kationenaustauscherkapazität (IEC) von 0,9 Milliäquivalent je Gramm wird in heißem (T>80°C) N-Methylpyrolidon (NMP) gelöst. Die sulfochlorierte Form ist bei diesem Gehalt nicht in THF löslich. Polymere Sulfonsäuren und ihre Salze sind nicht oder nur zu einem sehr geringen Anteil in THF löslich. Zu dieser Lösung gibt man nun eine Suspension von Montmorillonit K10 in NMP,der beladen ist mit einer Aminosulfonsäure. Die Sulfonsäuregruppen liegen dabei an der Oberfläche, während die Aminogruppen sich in den Kavitäten des Montmorllonit befinden. Die Zusammensetzung der Suspension ist wieder so gewählt, daß der Feststoffgehalt zwischen 2 und 20% Gew. des Polymergehaltes beträgt. Er ist davon abhängig für welchen Einsatzbereich die Membran benötigt wird. Die Suspension wird wieder wie oben zu einer Membran verarbeitet. Das Lösungsmittel wird im Trockenschrank bei einer Temperatur zwischen 80°C und 150°C abgedampft. Die Membran wird von der Glasplatte abgelöst und in demineralisiertem Wasser für 12 Stunden bei 90°C nachbehandelt.
3) Sulfochloriertes Polysulfon und aminiertes Polysulfon werden in THF gelöst. Danach wird 10% Gew. Montmorillonit K10 (getrocknet und in protonierter Form) hinzugegeben. Die Suspension wird gerührt, entgast und wie oben zu einer Membran verarbeitet. Die Membran wird nach dem Ablösen von der Glasplatte in verd. HCl bei 80°C nachbehandelt, dabei hydrolisiert die Sulfochloridgruppe wieder zur Sulfonsäure. Danach wird die Membran wieder in demineralisiertem Wasser weiterbehandelt bis die gesamte Salzsäure aus der Membran entfernt ist.

Es wurden nun überraschende Eigenschaften der erfindungsgemäßen Komposite festgestellt:
- die Komposites weisen auch bei Temperaturen von weit über 100°C hervorragende Ionenleitfähigkeiten auf. Speziell die Protonenleitfähigkeiten der Komposites sind in diesem Temperaturbereich noch sehr gut, was zum einen auf die wasserspeichernden Eigenschaften der Tonmineralien und zum anderen auf eine Eigenprotonenleitfähigkeit der Tonmineralien zurückzuführen ist. Die guten Protonenleitfähigkeiten erlauben den Einsatz dieser Komposites in Membranbrennstoffzellen im oben angeführten Temperaturbereich.
- durch die Kavitäten bildenden Silikate wird die chemische, mechanische und thermische Stabilität der Kompositmembranen signifikant erhöht, da die Polymermoleküle und die Tonmineralien bzw. Zeolithe in den Kavitäten miteinander wechselwirken können. Insbesondere basische Polymere und basische Polymerkomponenten enthaltende Ionomerblends können durch Wechselwirkung der basischen Gruppen in die lewissauren Kavitäten der Silicate intercalieren, wodurch eine ionische Vernetzung zwischen dem sauren Silikat und der basischen Polymerkette gebildet wird, die je nach System pH-unabhängig ist, was zu einer Erhöhung der mechanischen, chemischen und thermischen Stabilität beiträgt, insbesondere wenn die Kompositmembranen in stark saurem oder stark basischem Medium eingesetzt werden.
- beim Einsatz in DMFC zeigen die erfindungsgemäßen Kompositmembranen eine verringerte Methanolpermeabilität und Gasquerdiffusion über die Membran. Dabei kann die Methanolpermeabiltiät und Permselektivität der Membran gezielt eingestellt werden durch:
- die Art des Schicht-/ Gerüstsilikates;
- den Massenanteil des Silikats im Komposit;
- gezielten Einbau von Spacermolekülen und bifunktionellen Molekülen in die silikatischen Kavitäten. Die Art und Stärke der Wechselwirkung der Spacermoleküle mit den Permeatmolekülen hängt dabei von der Art ihrer nach außen zeigenden funktionellen Gruppen und von der Art der funktionellen Gruppen der Permeatmoleküle ab. Man koppelt z.B. eine Aminosulfonsäure oder Aminocarbonsäure mit der Aminfunktion im Austausch gegen Alkalibentonit an die Bentonitoberfläche. Die zweite funktionelle Gruppe steht für die Reaktion mit Polymeren oder in Elektromembranverfahren zum Protonentransport zur Verfügung.
- die erfindungsgemäßen Membranen weisen gegenüber herkömmlichen Ionomermembranen ein stark verringertes Fouling (mikrobieller Angriff der Ionomermembranen durch Pilze und Bakterien) auf, und dies bereits bei Gehalten von 2-5% des Silikats (Montmorillonit) in der Ionomermembran. Für diese Eigenschaft sind die im Komposit eingemischten Tonmineralien verantwortlich. Es ist schon lange bekannt, daß Tonmineralien dadurch als Bodenverbesserer wirken, daß sie den mikrobiellen Abbau, insbesondere durch Pilze stark verlangsamen. Es ist überraschend, daß diese Eigenschaft der Tonmineralien auch in tonmineralhaltigen Membranen zum Tragen kommt. Wegen dieser Eigenschaft der erfindungsgemäßen Komposites ist ihre Anwendung in Membrantrennverfahren im Wasser- und Abwasserbereich möglich und auch in jeder weiteren oxidierenden Umgebung, die beispielsweise Hydroxylradikale und/ oder Wasserstoffperoxid enthält.
- die katalytischen Eigenschaften der silicatischen Lewissäuren, aus denen die erfindungsgemäßen Tonmineralien bestehen, können auch in den erfindungsgemäßen Komposites ausgenutzt werden.

### Anwendungsbeispiele

1. Sulfoniertes Polyetheretherketon (Sulfonierungsgrad 70%) wird mit 5% Gew. Montmorillonit in DMAc gelöst und zu einer nach dem Abdampfen des Lösungsmittel 50µm dicken Membran gezogen. Diese Membran wird in Pilzkontaminiertes wässriges Medium gegeben. Es ist kein Pilzbefall feststellbar. Die Kontrolle ohne Montmorillonit wird stark bewachsen und angegriffen.
2. a) Sulfoniertes Polysulfon in der Salzform und Polyvinylpyridin wird in einem Verhältnis gemischt, daß man als Endkapazität 1 Milliäquivalent [H⁺] je Gramm Gesamtmischung erhält. Beide Polymere werden in DMAc gelöst und zu einer Membran verarbeitet.
   Der spezifische Widerstand, der so erhaltenen Membran beträgt 33 [Ohm x cm].
   b) Der gleichen Mischung wie in 2.a. wird zusätzlich noch 8 Gew.% aktivierter Montmorillonit zugesetzt und wie 2.a zu einer Membran verarbeitet. Der spezifische Widerstand beträgt 27,7 [Ohm x cm].
3. Polybenzimidazol in DMAc gelöst, wird einmal mit 10 Gew.% aktiviertem Montmorillonit versetzt und als Kontrolle ohne das Schichtsilikat. Beide Mischungen werden je zu einer Membran verarbeitet und Mittels Impedanzspektroskopie die Widerstände bestimmt. Ohne das Schichtsilikat beträgt der Widerstand 588 [Ohm x cm] mit Schichtsilikat 276 [Ohm x cm]

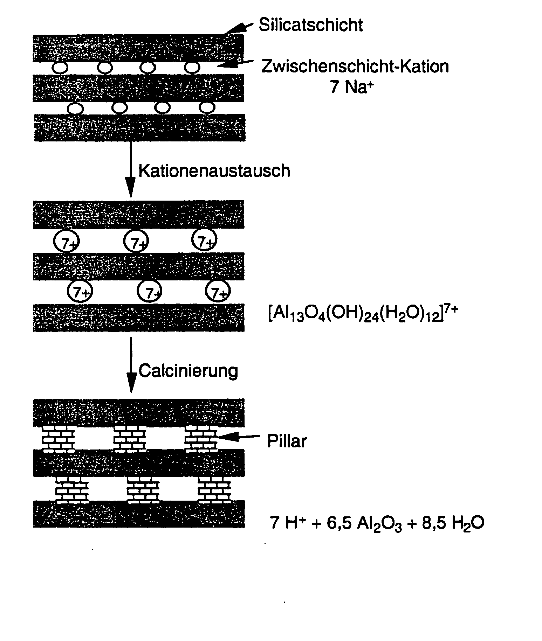

## Patentansprüche

1. Komposit enthaltend ein (A) Polymer, (B) eine Säure und (C) eine organische Base und (D) ein Schicht- und/oder Gerüstsilikat, wobei, bezogen auf die Summe aus Säure und Base sowie Schicht- und/oder Gerüstsilikat die Zusammensetzung des Säure-Base Anteils zu 1 bis 99 Gew. % und des Schicht- und/oder Gerüstsilikates und 99 bis 1 Gew. % beträgt, mit entweder
i) einem (E) unmodifiziertem Polymer und niedermolekularer Säure und Base oder
ii) einem (F) lonomer als Polymer oder eine Vorstufe des lonomers, wobei dieses ausgewählt wird aus folgenden Bestandteilen
(a) ein Kationenaustauscherpolymer, das die Kationenaustauschergruppen -SO₃H,- COOH, und/oder -PO₃H₂ aufweist, wobei das Polymer unvernetzt oder kovalent vernetzt sein kann und das Polymerrückgrat ein Vinylpolymer, ein Arylhauptkettenpolymer, Polythiazol, Polypyrazol, Polypyrrol, Polyanilin, Polythiophen oder eine beliebige Mischung der Genannten sein kann;
(b) ein Anionenaustauscherpolymer, das die Anionenaustauschergruppen -NR₃⁺ (R=H, Alkyl, Aryl), Pyridinium (PyrR+), Imidazolium (ImR+), Pyrazolium (PyrazR+), Triazolium (TriR+) aufweist, wobei das Polymer unvernetzt oder kovalent vernetzt sein kann und wobei das Polymerrückgrat ein Vinylpolymer, ein Arylhauptkettenpolymer, Polythiazol, Polypyrazol, Polypyrrol, Polyanilin, Polythiophen oder eine beliebige Mischung der Genannten sein kann;
(c) ein Polymer, das auf der Polymerkette sowohl Anionenaustauschergruppen aus (b) als auch Kationenaustauschergruppen aus (a) enthält; wobei das Polymerrückgrat ein Vinylpolymer, ein Arylhauptkettenpolymer, Polythiazol, Polypyrazol, Polypyrrol, Polyanilin, Polythiophen oder eine beliebige Mischung der Genannten sein kann;
(d) ein Blend aus (a) und (b), wobei der Blend zusätzlich zur ionischen Vernetzung noch kovalent vernetzt sein und das Polymerrückgrat dabei ein Vinylpolymer, ein Arylhauptkettenpolymer, Polythiazol, Polypyrazol, Polypyrrol, Polyanilin, Polythiophen oder eine beliebige Mischung der Genannten sein kann; wobei die Vorstufen des lonomers ausgewählt sind aus:
(I) die Vorstufe eines Kationenaustauscherpolymers
(ia) ein Polymer mit COHal-, CONR₂- oder COOR-Gruppen und R=H, Alkyl, Aryl, Hal=F, Cl, Br, l bedeutet,
(Ib) ein Polymer mit SO₂Hal-, SO₂NR₂- oder SO₂OR-Gruppen und R=H, Alkyl, Aryl, Hal=F, Cl, Br, I bedeutet,
(lc) ein Polymer mit PO₃Hal₂-, PO₃(NR₂)₂- oder PO₃(OR)₂-Gruppen und R=H, Alkyl, Aryl, Hal=F, Cl, Br, l bedeutet,
(11) die Vorstufe eines Anionenaustauscherpolymers mit den Gruppen-NR₂ und R=H, Alkyl, Aryl, Pyridyl (Pyr), Imidazolyl (im), Pyrazolyl (Pyraz), Triazolyl (Tri).

2. Komposit nach Anspruch 1, **dadurch gekennzeichnet, daß** es sich bei dem Schichtsilikat um einen Bestandteil aus der Gruppe der Bentonite handelt.

3. Komposit nach Anspruch 2, wobei Montmorillonit verwendet wird.

4. Komposit nach Anspruch 1 , **dadurch gekennzeichnet, dass** pillartierte Schichtsilikate verwendet werden.

5. Komposit nach Anspruch 1, **dadurch gekennzeichnet, daß** es sich bei dem Gerüstsilikat (Tectosilicate) um einen Bestandteil aus der Gruppe der Zeolithe handelt.

6. Komposit nach Anspruch 5 **dadurch gekennzeichnet, daß** Klinoptilolit verwendet wird.

7. Komposit nach einem der Ansprüche 1 bis 6 **dadurch gekennzeichnet, daß** sowohl natürliche als auch synthetische Schichtsilikate verwendet werden.

8. Komposit nach Anspruch 1 , **dadurch gekennzeichnet, daß** die basische Komponente lmidazol-, Vinylimidazol-, Pyrrazol-, Oxazol-, Cabazol-, Indol-, lsoindol-, Dihydrooxazol-, Isooxazol-, Thiazol-, Benzothiazol-, lsothiazol-, Benzoimidazol-, Imidazolidin-, Indazol-, 4,5-Dihydropyrazol-, 1,2,3-Oxadiazol-, Furazan-, 1,2,3-Thiadiazol-, 1,2,4-Thiadiazol-, 1,2,3-Benzotriazol-, 1,2,4-Triazol-, Tetrazol-, Pyrrol-, Anilin-, Pyrrolidin- oder Pyrrazolgruppen enthält.

9. Komposit nach Anspruch 1, **dadurch gekennzeichnet, daß** als lonomere Blends (d) verwendet werden und das Tonmineral Montmorillonit ist.

10. Komposit nach Anspruch 1, **dadurch gekennzeichnet, daß** als lonomere Blends (d) und als Zeolith Klinoptilolit bevorzugt wird.

11. Komposit nach einem der Ansprüche 1 bis 10 **dadurch gekennzeichnet, daß** das Polymerrückgrat des sauren Polymers aus der Gruppe der Aryl-Hauptkettenpolymere ausgewählt ist, die die möglichen Bausteine umfassen:
<Raromatisch>
und über Rbrücke verbrückt sind:
<Rbrücke>.

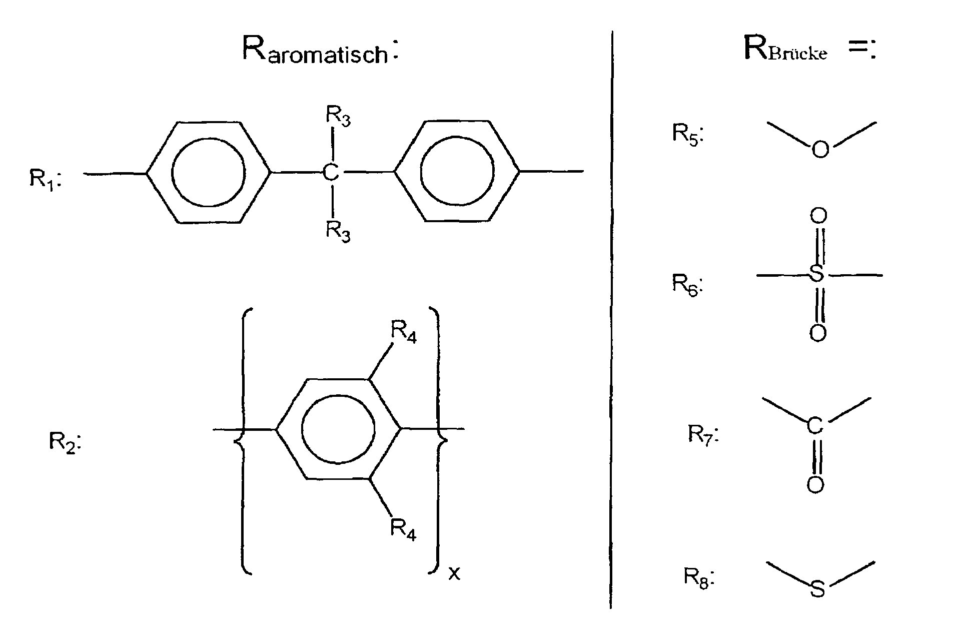

12. Komposit nach Anspruch 1 , **dadurch gekennzeichnet, daß** das Polymerrückgrat des basischen Polymers aus der Gruppe der Aryl-Hauptkettenpolymere gemäß Anspruch 1 oder aus der Gruppe der Heteroaryl-Hauptkettenpolymere ausgewählt ist, wobei die möglichen Bausteine der Heteroaryl-Hauptkettenpolymere sind .
(Abb .)

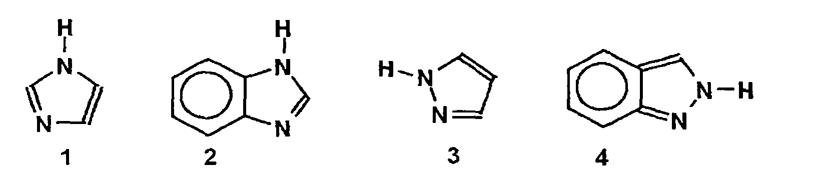

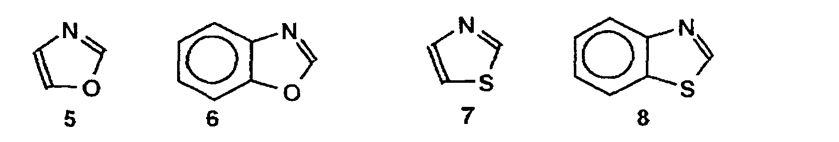

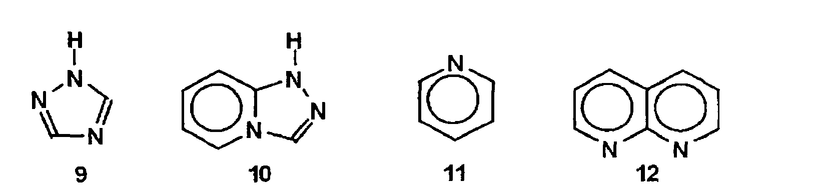

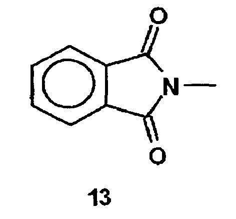

13. Komposit nach Anspruch 12, **dadurch gekennzeichnet, daß** aus folgende Heteroaryle verwendet werden:
Polyimidazole; Polybenzimidazole, Polypyrazole, Polybenzpyrazole, Polyoxazole, Polybenzoxazole, Polythiazole, Polybenzthiazole, Polythiophene, Polybenzthiophene, Polypyridine, Polyimide.

14. Komposit nach den Ansprüchen 1 bis 13, **dadurch gekennzeichnet, daß** in den Blends saure Polymere aus Anspruch 11 mit basischen Polymeren aus Anspruch 12 und Anspruch 8 kombiniert werden.

15. Komposit nach einem der vorangegangenen Ansprüche, **dadurch gekennzeichnet, dass** er funktionalisierte Schichtsilikate und/oder Gerüstsilikate enthält, die durch den gezielten Einbau von Spacermolekülen und bifunktionellen Molekülen modifiziert sind.

16. Komposit nach Anspruch 15, **dadurch gekennzeichnet, dass** die funktionalisierenden Hydrophobierungsmittel die allgemeine Formel l und/oder II haben: 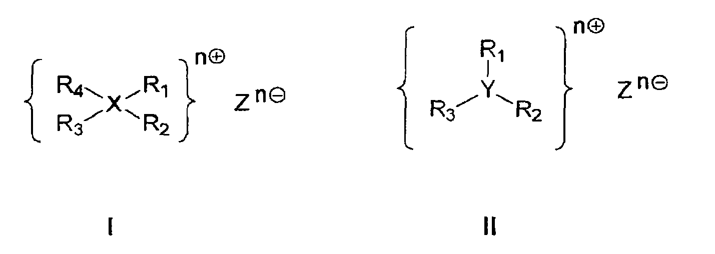 wobei die Substituenten folgende Bedeutung haben:
R1, R2, R3, R4 unabhängig voneinander Wasserstoff, einen geradkettigen verzweigten, gesättigten oder ungesättigten Kohlenwasserstoffrest mit 1 bis 40, vorzugsweise 1 bis 20 C-Atomen, welcher gegebenenfalls mindestens eine funktionelle Gruppe trägt oder 2 der Reste miteinander verbunden sind, insbesondere zu einem heterocyclischen Rest mit 5 bis 10 C-Atomen besonders bevorzugt mit einem und mehr N-Atomen,
X für Phosphor oder Stickstoff,
Y für Sauerstoff oder Schwefel,
n für eine ganze Zahl von 1 bis 5, vorzugsweise 1 bis 3 und
Z für eine Anion steht.

17. Komposit gemäß einem der vorangehenden Ansprüche, **dadurch gekennzeichnet, dass** die lonenaustauschkapazität der verwendeten Polymere zwischen 0,1 und 12 Milliäquivalent pro Gramm liegt.

18. Nicht ionisch leitende Komposite und Kompositblendmembranen, erhältlich aus den in den Ansprüchen 1 bis 14 verwendeten Grundpolymeren zu 20 bis 98 Gew. % und Schicht-/ Gerüstsilikaten zu 2 bis 80 Gew. % zur Verwendung in Membran- und Membrantrennverfahren.

19. Verwendung von Kompositen und Kompositblendmembranen nach einem der Ansprüche 1 bis 18 **dadurch gekennzeichnet, daß** sie in Membranbrennstoffzellen, insbesondere H2-Brennstoffzellen oder Direktmethanolbrennstoffzeilen bei Temperaturen von-40 C bis 200°C eingesetzt werden.

20. Verwendung eines Komposites nach einem der Ansprüche 1 bis 18, **dadurch gekennzeichnet, daß** Komposite und Kompositblendmembranen in Membrantrennverfahren wie Dialyse, Diffusionsdialyse, Gastrennung, Pervaporation, Perstraktion, Mikro-Ultra- und Nanofiltration sowie in der Umkehrosmose eingesetzt werden.

21. Verwendung von Kompositen und Kompositblendmembranen nach einem der Ansprüche 1 bis 18 **dadurch gekennzeichnet, daß** sie als katalytische Membranen oder in Membranreaktoren eingesetzt werden.

22. Verwendung von Komposits nach mindestens einem der Ansprüche 1 bis 17 zum Beschichten von flächigen Gebilden, insbesondere Membranen, Folien und Elektroden.

23. Verfahren zur Herstellung eines Komposits nach Anspruch 1 , **dadurch gekennzeichnet, daß** die Komponenten (A), (B), (C) und (D) des Anspruchs 1 bei Temperaturen von -40 C bis 300°C in einem Lösemittel oder gegebenenfalls lösemittelfrei miteinander in Kontakt gebracht werden.

24. Membran enthaltend einen Komposit nach einem der Ansprüche 1-18.

25. Herstellung einer Komposit-Membran nach Anspruch 24 oder eines Komposits, **dadurch gekennzeichnet, daß** eine Membran, die aus einem entsprechenden Blend oder allein aus einer der Komponenten aus einem der Ansprüchen 1-18 besteht, mit einer die silikatische Komponente enthaltenen Lösung oder Dispersion oder lösemitteffrei beschichtet wird.

26. Herstellung einer Komposit-Membran nach Anspruch 25 oder eines Komposits, **dadurch gekennzeichnet, daß** die silikatische Komponente mit einer Lösung oder Dispersion oder lösemittelfrei allein oder aus einem Gemisch der Komponenten aus den Ansprüchen 1-18 beschichtet wird.

27. Verwendung eines Komposits nach Anspruch 1 in Membranen und Membranverfahren zur Stabilisierung gegen mikrobiellen Abbau oder oxidativem Angriff.

28. Verfahren nach Anspruch 23, **dadurch gekennzeichnet, daß** die anorganische Komponente mit mindestens zwei verschiedenen basischen Komponenten gemischt wird, wobei die basischen Komponenten hoch-oder niedermolekular sein können.

29. Verfahren nach Anspruch 23, **dadurch gekennzeichnet, daß** die Komposite zu Formteilen beliebiger Art verarbeitet werden.

## Claims

1. Composite comprising (A) a polymer, (B) an acid and (C) an organic base and (D) a phyllosilicate and/or tectosilicate, wherein based on the sum of acid and base as well as phyllosilicate and/or tectosilicate the composition of the acid-base part is 1 to 99 weight % and of the phyllosilicate and tectosilicate is 99 to 1 weight %, with either
i) an (E) unmodified polymer and low molecular acid and base or
ii) an (F) ionomer as polymer or a precursor of an ionomer,
wherein the ionomer is selected from the group consisting of:
(a) a cation exchange polymer having a cation exchange group -SO₃H, -COOH and/or -PO₃H₂, wherein the polymer can be non-cross-linked or covalently crosslinked and the polymer backbone can be a vinyl polymer, an aryl main chain polymer, polythiazole, polypyrazole, polypyrrole, polyaniline, polythiophene or any blend of these;
(b) an anion exchange polymer having an anion exchange group -NR₃⁺ (R= H, alkyl, aryl), pyridinium (PyrR⁺), imidazolium (ImR⁺), pyrazolium (PyrazR⁺), triazolium (TriR⁺), wherein the polymer is non-cross-linked or covalently cross-linked, and wherein the polymer backbone comprises a vinyl polymer, an aryl main chain polymer, polythiazole, polypyrazole, polypyrrole, polyaniline, polythiophene or any blend thereof,
(c) a polymer containing on the polymer chain both anion exchange groups from (b) and cation exchange groups from (a), wherein the polymer comprises a vinyl polymer, an aryl main chain polymer, polythiazole, polypyrazole, polypyrrole, polyaniline, polythiophene or any blend thereof;
(d) a blend of (a) and (b), wherein the blend is covalently cross-linked in addition to an ionic cross-linking and the polymer backbone is a vinyl polymer, an aryl main chain polymer, polythiazole, polypyrazole, polypyrrole, polyaniline, polythiophene or any blend thereof;
wherein the precursor of the ionomer is selected from the group consisting of
(I) the precursor of a cation exchange polymer
(Ia) a polymer with COHal-groups, CONR₂-groups or COOR-groups
(Ib) a polymer with SO₂Hal-groups, SO₂NR₂-groups or SO₂OR-groups
(Ic) a polymer with PO₃Hal₂-groups, PO₃(NR₂)₂-groups or PO₃(OR)₂-groups
wherein R is hydrogen, alkyl, or aryl group, and wherein Hal is fluorine, chlorine, bromine, or iodine atom; or
(II) the precursor of an anion exchange polymer comprising -NR₂, pyridyl, imidazolyl, pyrazolyl, triazolyl groups.

2. Composite according to claim 1, **characterized in that** the phyllosilicate is part of the group of bentonites.

3. Composite according to claim 2, wherein montmorillonite is used.

4. Composite according to claim 1, **characterized in that** pillared phyllosilicates are used.

5. Composite according to claim 1, **characterized in that** the tectosilicate is a zeolite.

6. Composite according to claim 5, **characterized in that** clinoptilolite is used.

7. Composite according to any of claims 1 to 6, **characterized in that** both natural and synthetic phyllosilicates are used.

8. Composite according to claim 1, **characterized in that** the basic component contains imidazole-, vinylimidazole-, pyrrazole-, oxazole-, carbazole-, indole-, isoindole-, dihydrooxazole-, isooxazole-, thiazole-, benzothiazole-, isothiazole-, benzoimidazole-, imidazolidine-, indazole-, 4,5-dihydropyrazole-, 1,2,3-oxadiazole-, furazane-, 1,2,3-thiadiazole-, 1,2,4-thiadiazole-, 1,2,3-benzotriazole-, 1,2,4-triazole-, tetrazole-, pyrrole-, aniline-, pyrrolidine- or pyrrazole-groups.

9. Composite according to claim 1, **characterized in that** the ionomers are blends (d), and wherein the phyllosilicate is montmorillonite.

10. Composite according to claim 1, **characterized in that** it is preferred that the ionomers are blends (d), and the zeolite is clinoptilolite.

11. Composite according to any of claims 1 to 10, **characterized in that** the backbone of the acid polymer is chosen from the group of aryl main chain polymers, which comprise the following possible building blocks: <**R**aromatic> is bridged with <**R**bridge>

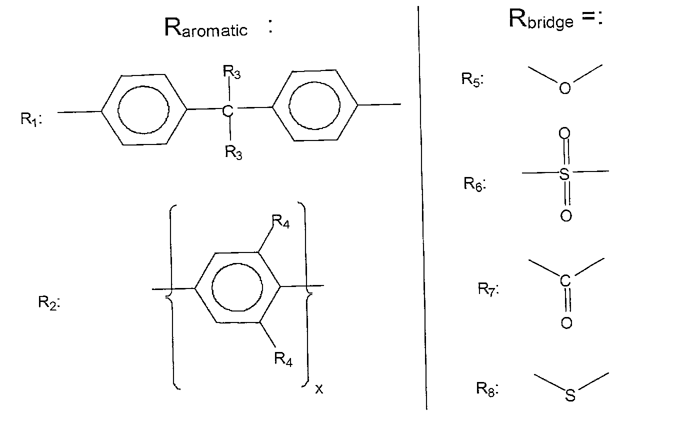

12. Composite according to claim 1, **characterized in that** the polymer backbone of the basic polymer is chosen from the group of aryl main chain polymers according to claim 1 or from the group of hetero-aryl main chain polymers, and wherein the hetero-aryl main chain polymers comprise the following possible building blocks:

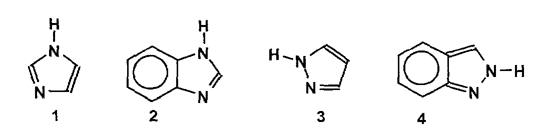

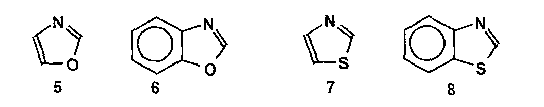

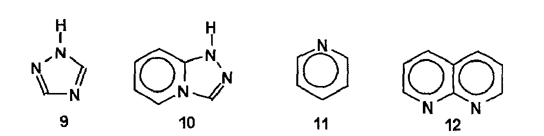

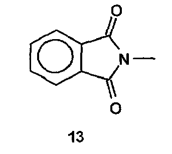

13. Composite according to claim 12 **characterized in that** the following hetarylpolymers are used
- polyimidazole, polybenzimidazole
- polypyrazole, polybenzpyrazole
- polyoxazole, polybenzoxazole
- polythiazole, polybenzthiazole
- polythiophene, polybenzthiophene
- polypyridine
- polyimide.

14. Composite according to any of claims 1 to 13 **characterized in that** the blends contain acidic polymers of claim 11 and basic polymers of claim 12 and claim 8.

15. Composite according to at least one of the preceding claims, **characterized in that** it contains functionalized phyllosilicates and/or tectosilicates which are modified by the targeted insertion of spacermolecules and bifunctional molecules in the silicates.

16. Composite according to claim 15, **characterized in that** the functionalising hydrophobisation reagents, those of general formula I and/or II are mentioned: 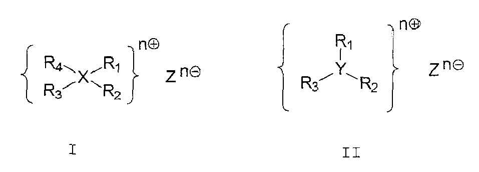 and wherein the substituents are **characterized in that** R1, R2, R3, R4 independently of each other: hydrogen, a straight chain, branched, saturated or unsaturated hydrocarbon radical with 1 to 40 C atoms, preferably 1 to 20 C atoms, optionally carrying at least one functional group or 2 of the radicals are linked with each other, preferably to a heterocyclic residue having 5 to 10 C atoms, more preferably having one ore mor N atoms,
x represents phosphorous or nitrogen,
Y represents oxygen or sulphur,
n is an integer number from 1 to 5, preferably 1 to 3, and
Z is an anion.

17. Composite according to at least one of the preceding claims, **characterized in that** the used polymers have an ion exchange capacity between 0,1 and 12 meq/g.

18. Non ionic conducting composites and composite-blend-membranes, **characterized in that** they contain 20 to 98 % weight of polymers according to claim 1 to 14 and phyllosilicate and/or tectosilicate 2 to 80 % weight for the use in membrane processes and membrane separation processes.

19. Use of composites and composite-blend-membranes according to one of claim 1 to 18 **characterized in that** they are used in membrane fuel cells preferable in Hydrogen Fuel Cells or Direct methanol fuel cells at the temperature range -40°C to 200°C.

20. Use of a composite according to one of claim 1 to 18 **characterized in that** composites and composite-blend-membranes are used in (electro)membrane separation processes such as dialysis, diffusion dialysis, gas separation, pervaporation, perstraction, micro-, ultra- and nano- filtration as well as in reverse osmosis.

21. Use of a composite or a composite-blend-membrane according to claim 1 to 18 characteridzed in that they are used as catalytic membrane or in membrane reactors.

22. Use of a composite according to at least one of the claims 1 to 17 for coating of flat structures, especially membranes, foils and electrodes.

23. Process for the preparation of a composite according to claim 1, **characterized in that** the components (A), (B), (C) and (D) of claim 1 are brought into contact in a solvent or optionally solvent-free at the temperature range of -40°C to 300°C.

24. Membrane containing a composite according to any claim of 1 to 18.

25. Preparation of a composite or a composite membrane according to claim 24, **characterized in that** the membrane or the blend-membrane which contains one of the components of claim 1 to 18 is coated with a solution or dispersion or solvent-free with the silicate component.

26. Preparation of a composite membrane according to claim 25 or of a composite **characterized in that** the silicate component is coated with a solution or dispersion or solvent-free alone or with a blend of components from the claims 1 to 18.

27. Use of a composite according to claim 1 in membrane and membrane processes for stabilization against microbial degradation or oxidative attack.

28. Preparation of a composite according to claim 23, **characterized in that** the inorganic component is mixed with at least two different basic components, wherein the basic components can be high or low molecular.

29. A process according to claim 23 **characterized in that** the composites are processed to shaped pieces of any kind.

## Revendications

1. Composites contenant un (A) polymère, (B) un acide (C) une base organique et (D) un phyllosilicate et/ou un tectosilicate, dont la composition de la part acide-base est de 1% à 99% au poid et du phyllosilicate et/ou tectosilicate 99% à 1% au poids relative à la somme de l'acide et de la base ainsi que du phyllosilicate et/ou tectosilicate, avec soit
i) un (E) polymère non-modifié et de l'acide et base à poids moléculaire bas soit
ii) un (F) ionomère comme polymère ou un précurseur du ionomère, lequel est choisi parmi les composantes suivantes
(a) un polymère échangeur de cations comportant les groupes échangeurs de cations -SO₃H, -COOH et/ou -PO₃H₂-, dont le polymère peut être non-ramifié ou ramifié covalent et la chaîne de polymère peut être un polymère vinyle, un polymère à chaîne principale aryle, un polythiazole, polypyrazole, polypyrrole, polyaniline, polythiophène ou un mélange de ces composantes;
(b) un polymère échangeur d'anions comportant les groupes échangeurs d'anions -NR₃⁺ (R=H, alkyl, aryle), pyridinium (PyrR⁺), imidazolium (ImR⁺), pyrazolium (PyrazR⁺), triazolium (TriR⁺), dont le polymère peut être non-ramifié ou ramifié covalent et la chaîne de polymère peut être un polymère vinyle, un polymère à chaîne principale aryle, un polythiazole, polypyrazole, polypyrrole, polyaniline, polythiophène ou un mélange de ces composantes;
(c) un polymère comportant sur la chaîne de polymère et des groupes échangeurs d'anions de (b) et des groupes échangeurs de cations d'(a), dont la chaîne de polymère peut être un polymère vinyle, un polymère à chaîne principale aryle, un polythiazole, polypyrazole, polypyrrole, polyaniline, polythiophène ou un mélange de ces composantes;
(d) un mélange de (a) et (b) dont le mélange est ramifié covalent en plus de la ramification ionique et la chaîne de polymère peut être un polymère vinyle, un polymère à chaîne principale aryle, un polythiazole, polypyrazole, polypyrrole, polyaniline, polythiophène ou un mélange de ces composantes;
dont les précurseurs du ionomère sont choisis parmi:
(I) le précurseur d'un polymère échangeur de cation
(la) un polymère avec des groupes COHal-, CONR₂- ou COOR et R signifie H, alkyl ou aryl et Hal signifie F, Cl, Br ou I,
(Ib) un polymère avec des groupes SO₂Hal, SO₂NR₂- ou SO₂OR- et R signifie H, alkyl ou aryl et Hal signifie F, CI, Br ou I,
(Ic) un polymère avec des groupes PO₃Hal₂, PO₃(NR₂)₂- ou PO₃(OR)₂- et R signifie H, alkyl ou aryl et Hal signifie F, Cl, Br ou I,
(II) le précurseur d'un polymère échangeur d'anion avec les groupes -NR₂ et R signifie H, alkyl, aryl, pyridyl (Pyr), imidazolyle (im), pyrazolyl (Pyraz), triazolyle (Tri).

2. Composite selon la revendication 1, **caractérisé en ce que** le phyllosilicate comme composante est choisi parmi le groupe des bentonites.

3. Composite selon la revendication 2, **caractérisé en ce que** du Montmorillonite est utilisé.

4. Composite selon la revendication 1, **caractérisé en ce que** des phyllosilicates pillartés sont utilisés.

5. Composite selon la revendication 1, **caractérisé en ce que** le tectosilicate est choisi parmi le groupe des zéolithes.

6. Composite selon la revendication 5, **caractérisé en ce que** du Klinoptilolite est utilisé.

7. Composite selon une des revendications 1 à 6, **caractérisé en ce que** et des phyllosilicates naturels et des phyllosilicates synthétiques sont utilisés.

8. Composite selon la revendication 1, **caractérisé en ce que** la composante basique contient des groupes imidazoles, vnylimidazoles, pyrrazoles, oxazoles, cabazoles, indoles, isoindoles, dihydrooxazoles, isooxazoles, thiazoles, benzothiazoles, isothiazoles, benzoimidazoles, imidazolidines, indazoles, 4,5-dihydropyrazoles, 1,2,3-oxadiazoles, furazanes, 1,2,3-thiadiazoles, 1,2,4-thiadiazoles, 1,2,3-benzotriazoles, 1,2,4-triazoles, tetrazoles, pyrroles, anilines, pyrrolidines ou pyrrazoles.

9. Composite selon la revendication 1, **caractérisé en ce que** comme ionomère des mélanges (d) sont utilisés et que le minéral d'argile est du Montmorillonite.

10. Composite selon la revendication 1, **caractérisé en ce que** comme ionomère des mélanges (d) et comme minéral d'argile Klinoptilolite sont préférés.

11. Composite selon une des revendications 1 à 10, **caractérisé en ce que** la chaîne de polymère du polymère acide est choisie parmi le groupe des polymères à chaîne principale aryle qui comportent les éléments constitutifs <R_{aromatisch}> et sont liés par <R_{Brücke}> :

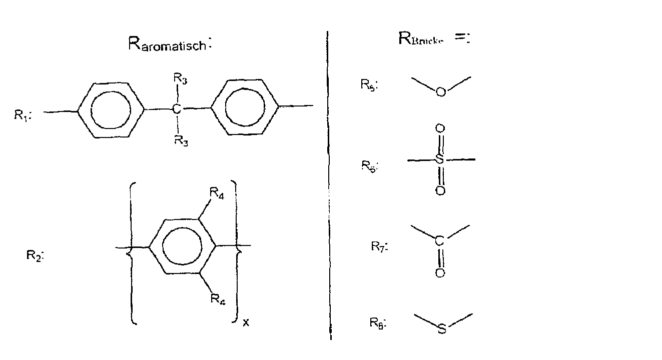

12. Composite selon la revendication 1, **caractérisé en ce que** la chaîne de polymère du polymère basique est choisie parmi le groupe des polymères à chaîne principale aryle selon la revendication 1 ou parmi le groupe des polymères à chaîne principale hétéro-aryle, où les éléments constitutifs possibles sont :

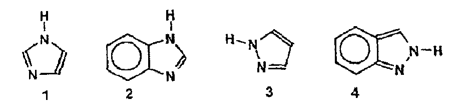

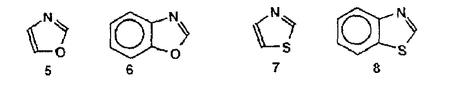

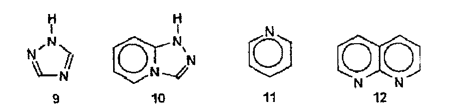

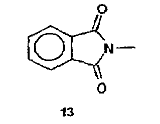

13. Composite selon la revendication 12, **caractérisé en ce que** les hétéro-aryles suivants sont utilisés : polyimidazoles, polybenzimidazoles, polypyrazoles, polybenzpyrazoles, polyoxazoles, polybenzoxazoles, polythiazoles, polybenzthiazoles, polythiophènes, polybenzthiophènes, polypyridines, polyimides.

14. Composite selon les revendications 1 à 13, **caractérisé en ce que** dans les mélanges des polymères acides de la revendication 11 sont combinés avec des polymères basiques des revendications 12 et 8.

15. Composite selon l'une des revendications précédentes, **caractérisé en ce qu'**il contient des phyllosilicates fonctionalisés et ou des tectosilicates fonctionalisés, lesquels sont modifiés par la mise en place ciblée de molécules espacantes et de molécules bi-fonctionnelles.

16. Composite selon la revendication 15, **caractérisé en ce que** les agents d'hydrophobisation fonctionnalisés ont la formule générale I et/ou II : 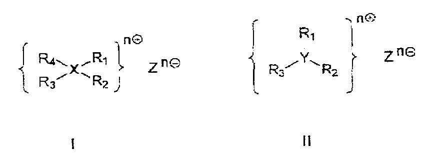 où les substituants ont la signification suivante :
R1, R2, R3, R4 indépendamment l'un de l'autre de l'hydrogène, un groupe hydrocarbure à non-ramifié, ramifié, saturé ou insaturé avec 1 à 40, de préférence 1 à 20 atome(s) de carbone, lequel porte le cas échéant au moins un groupe fonctionnel ou 2 des restes sont reliés, en particulier pour donner un radical hétérocyclique avec 5 à 10 atomes de carbone, particulièrement préféré avec un ou plusieurs atome d'azote,
X est mis pour phosphore ou azote,
Y est mis pour l'oxygène ou soufre,
N est mis pour un nombre entier de 1 à 5, de préférence 1 à 3 et
Z est mis pour un anion.

17. Composite selon l'une des revendications précédentes, **caractérisé en ce que** la capacité d'échangeuse d'ions des polymères utilisés est entre 0,1 et 12 milliéquivalent par gramme.

18. Composite et composites de membrane non-ioniques conducteurs obtenues avec les polymères de base utilisé dans les revendications 1 à 14 de 20 à 98% de poids et phyllosilicate/tectosilicate de 2 à 80% de poids pour l'utilisation dans des procédés de membrane et des procédés de séparation par membrane.

19. L'utilisation des composites et composites de membrane selon l'une des revendications 1 à 18, **caractérisé en ce qu'**il sont utilisés dans des piles à combustibles à membrane (hydrogène ou piles à combustible direct méthanol) à des températures de -40 °C à 200 °C.

20. L'utilisation des composites selon l'une des revendications 1 à 18, **caractérisé en ce que** des composites et composites de membrane sont utilisés dans des procédés de séparation par membrane tel que la dialyse, la dialyse de diffusion, séparation de gaz, pervaporation, perstraction, microfiltration, ultrafiltration, nanofiltration ainsi que l'osmose inverse.

21. L'utilisation des composites et composites de membrane selon l'une des revendications 1 à 18, **caractérisé en ce qu'**ils sont utilisés comme membranes catalytiques ou dans des réacteurs à membrane.

22. L'utilisation des composites selon au moins une des revendications 1 à 17 pour recouvrir des surfaces, en particulier des membranes, des films et des électrodes.

23. Procédé pour la fabrication d'un composite selon la revendication 1, **caractérisé en ce que** les composants (A), (B), (C) et (D) de la revendication 1 sont mis en contact à des températures de -40 °C à 300°C dans un solvant ou le cas échéant sans solvant.

24. Membrane contenant un composite selon l'une des revendications 1 à 18.

25. Fabrication d'un composite de membrane selon la revendication 24 ou d'un composite **caractérisé en ce qu'**une membrane composée d'un mélange ou d'un des composants de l'une des revendications 1 à 18, est recouverte avec le composant silicaté en solution ou en dispersion ou sans solvant.

26. Fabrication d'un composite de membrane selon la revendication 25 ou d'un composite **caractérisé en ce que** le composant silicaté est recouvert avec un des composants ou un mélange des composants de l'une des revendications 1 à 18 en solution ou en dispersion ou sans solvant.

27. Utilisation d'un composite selon la revendication 1 dans des membranes et des procédés de membrane pour stabiliser contre la décomposition microbielle ou l'attaque oxydative.

28. Procédé selon la revendication 23, **caractérisé en ce que** le composant inorganique est mélangé avec au moins deux composants basiques différents de poids moléculaires bas ou élevés.

29. Procédé selon la revendication 23, **caractérisé en ce que** les composites sont travaillés dans des pièces de forme quelconque.
